**Europäisches Patentamt**

**European Patent Office**

**Office européen des brevets**

(11) Veröffentlichungsnummer: **0 336 254**
A1

# (12) EUROPÄISCHE PATENTANMELDUNG

(21) Anmeldenummer: 89105389.4

(22) Anmeldetag: 25.03.89

(51) Int. Cl.⁴: **B09B 3/00**

(30) Priorität: 06.04.88 DE 3811486

(43) Veröffentlichungstag der Anmeldung:
**11.10.89 Patentblatt 89/41**

(84) Benannte Vertragsstaaten:
**AT BE CH DE ES FR GB GR IT LI LU NL SE**

(71) Anmelder: **ALFRED TEVES GMBH**
**Guerickestrasse 7**
**D-6000 Frankfurt/Main 90(DE)**

(72) Erfinder: **Schmidt, Hans Günter**
**Sudetenstrasse 47**
**D-6203 Hochheim(DE)**

(74) Vertreter: **Portwich, Peter**
**c/o ALFRED TEVES GMBH Guerickestrasse 7**
**D-6000 Frankfurt/Main 90(DE)**

(54) **Einrichtung zur Entsorgung von Treib- und/oder Kältemitteln.**

(57) Insbesondere für die Entsorgung von Fluor-Chlor-Kohlenwasserstoffen aus Schaum- und/oder Kunststoffen wird eine Einrichtung vorgeschlagen, wobei eine Zerkleinerungskammer (1), die mit dem zu entsorgenden Gut beschickbar ist, und Mittel (2) aufweist, durch welche die Treib- und/oder Kältemittel freisetzbar sind, von einem Fluid durchströmt ist, wobei der Fluidstrom nach Austritt aus der Zerkleinerungskammer (1) mittels einer Leitung (11,14) mit mindestens einer Kühlerstufe (12,15) verbunden ist, in der das Treib- und/oder Kältemittel auskondensierbar ist.

EP 0 336 254 A1

## Einrichtung zur Entsorgung von Treib- und/oder Kältemitteln

Die Erfindung betrifft eine Einrichtung zur Entsorgung von Treib- und/oder Kältemitteln, insbesondere von Fluor-Chlor-Kohlenwasserstoffen aus Schaum- und/oder Kunststoffen.

Zum Verschäumen von Kunststoffen und Schaumstoffen werden als Treibmittel meist Fluor-Chlor-Kohlenwasserstoffe (FCKW) verwendet. Diese gelten als ausgesprochen umweltschädigend. Um ein Freisetzen des in den Schaumstoffporen eingeschlossenen FCKW zu verhindern, werden derzeit Abfallschaumstoffe auf Deponien gelagert. Dies ist natürlich eine ausgesprochen unwirtschaftliche Vorgehensweise.

Der Erfindung liegt daher die Aufgabe zugrunde, eine Einrichtung zur Entsorgung zu schaffen, welche auf wirtschaftlich rentable Weise eine umweltschonende Entsorgung gewährleistet.

Diese Aufgabe wird erfindungsgemäß dadurch gelöst, daß eine Zerkleinerungskammer, die mit dem zu entsorgenden Gut beschickbar ist und Mittel aufweist, durch welche die Treib- und/oder Kältemittel freisetzbar sind, von einem Fluid durchströmt ist, wobei der Fluidstrom nach Austritt aus der Zerkleinerungskammer mittels einer Leitung mit mindestens einer Kühlerstufe verbunden ist, in der das Treib- und/oder Kältemittel auskondensierbar ist.

Die erfindungsgemäße Anlage ermöglicht nicht nur eine umweltgerechte Entsorgung des FCKW enthaltenden Materials, sondern auch eine Rückgewinnung des FCKW, welches nach dem Auskondensieren in Behälter abfüllbar und anschließend wiederverwendbar ist. Auch das Schaumstoffmaterial ist, nachdem es vom FCKW getrennt ist, beispielsweise zur Herstellung von Leichtbausteinen, wiederverwendbar.

Ein besonderes Anwendungsgebiet der Erfindung ist das der Entsorgung von Kühlanlagen. Wegen der hohen Isolationswirkung des in den Poren des eingeschäumten Isolationsstoffes eingelagerten Kältemittels kann auf das FCKW-haltige Treibmittel nicht ohne erheblichen Aufwand verzichtet werden. Bei einem haushaltsüblichen Kühlschrank ist die FCKW-Menge im Kältemittelkreislauf nur ein Drittel des in der Isolierung enthaltenen FCKW.

Dadurch, daß der Fluidstrom nach Durchlaufen der Kühlerstufe mittels einer Rückleitung an die Zerkleinerungskammer angeschlossen ist, ist ein besonders wirtschaftlicher Umlaufbetrieb möglich.

Wird ein geringer Teil des Fluidstromes von der Rückleitung abgezweigt und nach Durchströmen einer Filtereinrichtung an die Atmosphäre geführt, so ist es möglich in der Zerkleinerungskammer einen Unterdruck zu erzeugen, welcher sicherstellt, daß kein FCKW aus der Zerkleinerungskammer entweichen kann. Die Filtereinrichtung ist so ausgelegt, daß der abgeführte Teilstrom völlig FCKW frei ist.

Von Vorteil ist es auch, daß der Fluidstrom nach Durchlaufen der Kühlerstufe durch eine Heizvorrichtung geführt ist, so daß durch die Rückleitung ein wiedererwärmter Fluidstrom zur Zerkleinerungskammer geführt ist, welcher dann das in der Zerkleinerungskammer freigesetzte FCKW aufnehmen und wieder zur Kühlerstufe transportieren kann. Dabei ist es besonders ökonomisch, wenn die in der Kühlerstufe aufgenommene Wärme zur Aufheizung der Heizvorrichtung genutzt wird.

Um einen kontinuierlichen Betrieb der Entsorgungseinrichtung sicherzustellen, ist es von Vorteil, daß die Filtereinrichtung aus zwei Aktivkohlefiltern besteht, deren Aktivkohle wechselweise mit dem Treib- und/oder Kältemittel beladen und von diesem entladen wird. Besonders günstig ist es dabei, daß die Beladung der Aktivkohlefilter durch den zur Atmosphäre geführten Teilstrom des Fluidstroms etwa auf dem Temperaturniveau der letzten Kühlerstufe folgt, während zur Entladung der Aktivkohle ein erwärmter Fluidteilstrom durch den Aktivkohlefilter geführt ist, der anschließend durch eine Rückführleitung an die Leitung zwischen Zerkleinerungskammer und Kühlstufe angeschlossen ist. Durch die Wahl der unterschiedlichen Temperaturniveaus, wird für eine optimale Be- und Entladeleistung der Aktivkohle gesorgt.

Bei einer bevorzugten Ausführung wird als Mittel zum Freisetzen der FCKW innerhalb der Zerkleinerungskammer eine Zerkleinerungsvorrichtung, beispielsweise eine Walzenanordnung oder Shreddervorrichtung benutzt. Eine zusätzliche Sicherheit gegen austretende FCKW aus der Zerkleinerungs kammer wird dadurch erreicht, daß die Eingänge für das zu entsorgende Material in die Zerkleinerungskammer und die Ausgänge für das entsorgte Material aus der Zerkleinerungskammer durch Luftschleieranlagen geschützt sind. Wird die Entsorgungseinrichtung mit Verbundstoffen, beispielsweise Metall mit aufgeschäumten Isolierungen aus Schaumstoff, beschickt, dann kann eine besonders kompakt aufgebaute Entsorgungseinrichtung dadurch geschaffen werden, daß innerhalb der Zerkleinerungskammer eine Trennung des Materials nach Metallen und Schaum- und/oder Kunststoffen erfolgt.

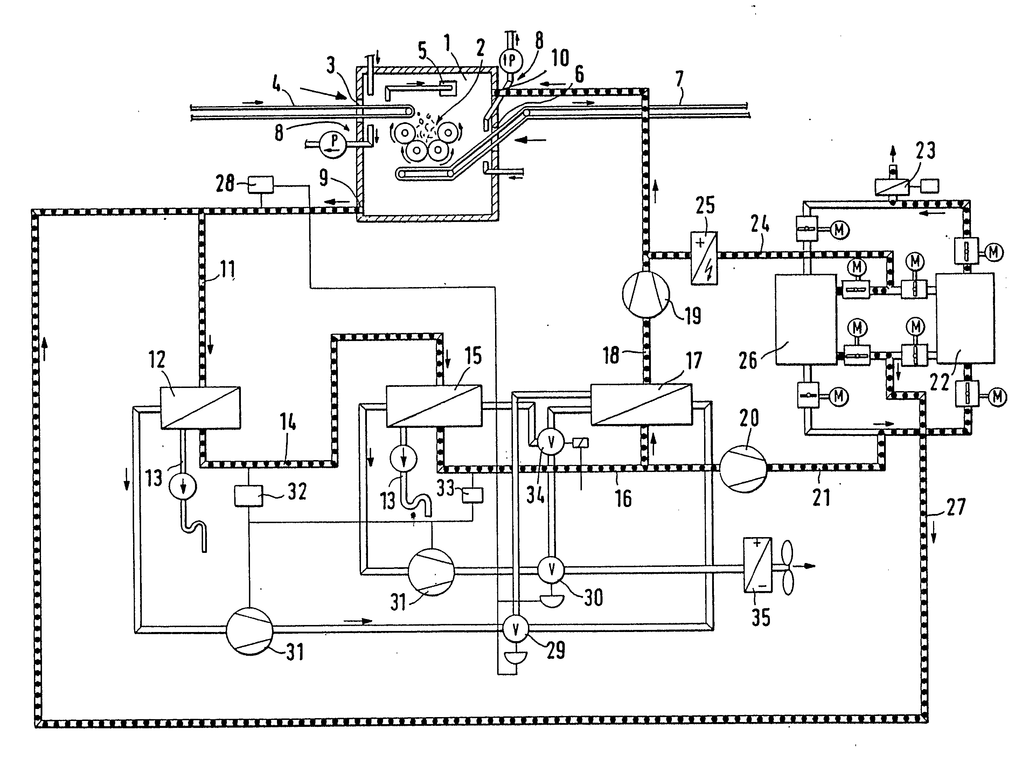

Die Funktion und weitere vorteilhafte Merkmale der Erfindung ergeben sich aus der nachstehenden Beschreibung einer bevorzugten Ausführungsform an Hand der Zeichnung.

Hierzu zeigt die einzige Figur eine Zerkleinerungkammer 1, in welcher sich die Zerkleinerungs-

2

vorrichtung 2 befindet, die sich aus mehreren antreibbaren Walzen zusammensetzt. Durch den Eingang 3 wird das zu entsorgende Material mittels eines Förderbandes 4 in die Zerkleinerungskammer 1 gebracht und der Zerkleinerungsvorrichtung 2 zugeführt. Über eine nicht näher dargestellte Separationsanlage werden die metallischen Teile von den Kunst- und Schaumstoffteilen getrennt und durch einen Ausgang 5 aus der Zerkleinerungskammer herausgebracht. Durch die Zerkleinerungsvorrichtung wird der plastische Kunststoff und der Schaumstoff zerquetscht und so zerkleinert, daß der größte Anteil von FCKW freigesetzt wird. Das zerkleinerte und gepreßte Kunststoff bzw. Schaumstoffmaterial wird durch den Ausgang 6 mittels eines Transportbandes 7 aus der Zerkleinerungskammer 1 geführt. Der Eingang 3 und die Ausgänge 5,6 sind durch sogenannte Luftschleusen 8 gesichert, die eine Luftströmung quer zur Ein- bzw. Ausgangsrichtung durch Verdichter erzeugen.

Die Zerkleinerungskammer ist über die Anschlüsse 9 und 10 an einen punktiert dargestellten Umluftstrom angeschlossen. Dieser führt über eine Leitung 11 vom Anschluß 9 zur ersten Kühlerstufe 12, in der die Umluft von ca. 40°C, die in der Zerkleinerungskammer 1 herrschen, auf etwa 3°C abgekühlt wird. Das dabei anfallende Kondensat, welches im wesentlichen aus FCKW und einem Wasseranteil besteht, wird über die Kondensatableitung 13 einem Abfüllbehälter zugeführt. Die Leitung 14 führt zur zweiten Kühlerstufe 15, in der der Umluftstrom dann auf -25°C abgekühlt wird. Analog zur ersten Kühlerstufe 12 ist auch an der zweiten Kühlerstufe 15 eine Kondensatableitung 13 vorgesehen. Über die Leitung 16 ist eine Verbindung von der zweiten Kühlerstufe 15 zur Heizvorrichtung 17, in der eine Erwärmung des Umluftstromes auf etwa 40°C erfolgt. Die Leitung 18 verbindet die Heizvorrichtung 17 über den Umluftventilator 19 mit dem Anschluß 10 an der Zerkleinerungskammer 1.

Zur Aufrechterhaltung eines Unterdruckes in der Zerkleinerungskammer 1 wird dem Umluftstrom stets eine Teilmenge durch den Fortluftventilator 20 entzogen und über eine Leitung 21, welche zwischen der zweiten Kühlerstufe 15 und der Heizvorrichtung 17 an die Leitung 16 angeschlossen ist, dem Aktivkohlefilter 22 zugeführt. Vom Aktivkohlefilter 22 wird der Umluftteilstrom über eine Meßkammer 23 an die Atmosphäre abgegeben. In der Meßkammer 23 wird überprüft, ob der Abluftstrom FCKW-Anteile aufweist; ist dies der Fall, so wird ein Warnsignal geschaltet und die gesamte Anlage außer Betrieb gesetzt.

Von der Leitung 18 zweigt zwischen Anschluß 10 und Umluftventilator 19 eine Leitung 24 ab, welche über die Heizung 25 zum zweiten Aktivkohlefilter 26 geführt ist. Die Strömung durch die beiden Aktivkohlefilter 22 und 26 wird durch von Stellmotoren angetriebene luftdicht schließende Klappen gesteuert, so daß im zeitlichen Wechsel stets ein Aktivkohlefilter (in der dargestellten Schaltung Aktivkohlefilter 22) mit FCKW beladen wird, und das andere (in der Darstellung Aktivkohlefilter 26) von FCKW entladen wird. Eine entsprechende Überwachungsschaltung der Luftklappen stellt eine FCKW-freie Fortluft sicher.

Die Aktivkohle in den Filtern 22,26 besitzt einen besonders effektiven Absorbtionswirkungsgrad für FCKW in einem Temperaturbereich um etwa -25°C, während die Reinigung der Aktivkohle von FCKW bei einem Luftstrom von etwa 60°C besonders wirksam ist. Entsprechend erfolgt in der Heizung 25 eine Erwärmung des Luftstromes auf diese Temperatur.

Nachdem der über die Leitung 24 zugeführte Luftstrom sich beim Durchlaufen des Aktivkohlefilters 26 mit FCKW aufgeladen hat, wird er über die Rückführleitung 27, welche zwischen Anschluß 9 und der ersten Kühlstufe 12 an die Leitung 11 angeschlossen ist, erneut den Kondensationsstufen zugeführt und gereinigt.

Die wärmetechnische Schaltung der beiden Kühlerstufen 12,15 und der Heizvorrichtung 17 sieht vor, daß die Abfallwärme der beiden Kühlerstufen für den Aufheizvorgang in der Heizvorrichtung 17 genutzt wird. Die der Heizvorrichtung 7 zugeführte Wärme wird über ein Thermostat 28, welches in der Leitung 11 vorgesehen ist und die Ventile 29,30 schaltet, geregelt. Für den Umlauf im Kältemittelkreislauf sorgen zwei Kältemittelkompressoren 31, von denen je einer einer Kühlstufe 12 bzw. 15 zugeordnet ist, und die von den Thermostaten 32,33 geregelt werden. Über ein Ventil 34 wird in verschiedenen Zeitabständen (je nach Bereifungsgrad in der zweiten Kühlerstufe 15) ein Wärmestrom zum Abtauen durch die zweite Kühlerstufe 15 geleitet. Während des Abtauvorganges wird das Umluftsystem abgeschaltet. Das Kondensat wird mittels einer Flüssigkeitspumpe in einen Transportbehälter abgepumpt. Die überschüssige Wärme im Kältekreislauf wird über einen Außenkondensator 35 an die Umgebungsluft abgeführt. Der Außenkondensator 35 hat eine Winterstarteinrichtung, die einen ganzjährigen Betrieb ermöglicht.

Bezugszeichenliste

1 Zerkleinerungskammer
2 Zerkleinerungsvorrichtung
3 Eingang
4 Förderband
5 Ausgang
6 Eingang
7 Transportband

8 Luftschleuse
9 Anschluß
10 Anschluß
11 Leitung
12 erste Kühlerstufe
13 Kondensatableitung
14 Leitung
15 zweite Kühlerstufe
16 Leitung
17 Heizvorrichtung
18 Leitung
19 Umluftventilator
20 Fortluftventilator
21 Leitung
22 Aktivkohlefilter
23 Meßkammer
24 Leitung
25 Heizung
26 Aktivkohlefilter
27 Rückführleitung
28 Thermostat
29 Ventil
30 Ventil
31 Kältemittelkompressor
32 Thermostat
33 Thermostat
34 Ventil
35 Außenkondensator

**Ansprüche**

1. Einrichtung zur Entsorgung von Treib- und/oder Kältemitteln, insbesondere von FCKW aus Schaum- und/oder Kunststoffen, dadurch **gekennzeichnet**, daß eine Zerkleinerungskammer (1), die mit dem zu entsorgenden Gut beschickbar ist, und Mittel (2) aufweist, durch welche die Treib- und/oder Kältemittel freisetzbar sind, von einem Fluid durchströmt ist, wobei der Fluidstrom nach Austritt aus der Zerkleinerungskammer (1) mittels einer Leitung (11,14) mit mindestens einer Kühlerstufe (12,15) verbunden ist, in der das Treib- und/oder Kältemittel auskondensierbar ist.

2. Einrichtung nach Anspruch 1, dadurch **gekennzeichnet**, daß der Fluidstrom nach Durchlaufen der Kühlerstufe (12,15) mittels einer Rückleitung (18) an die Zerkleinerungskammer (1) angeschlossen ist.

3. Einrichtung nach Anspruch 2, dadurch **gekennzeichnet**, daß ein Teil des Fluidstroms von der Rückleitung (18) abgezweigt ist und nach Durchströmen einer Filtereinrichtung (22,26) an die Atmosphäre geführt ist.

4. Einrichtung nach einem der vorhergehenden Ansprüche, dadurch **gekennzeichnet**, daß der Fluidstrom nach Durchlaufen der Kühlerstufe (12,15) durch eine Heizvorrichtung (17) geführt ist.

5. Einrichtung nach Anspruch 3, dadurch **gekennzeichnet**, daß die Filtereinrichtung aus zwei Aktivkohlefiltern (22,26) besteht, deren Aktivkohle wechselweise mit dem Treib- und/oder Kältemittel beladen und von diesem entladen wird.

6. Einrichtung nach Anspruch 5, dadurch **gekennzeichnet**, daß die Beladung der Aktivkohlefilter (22,26) durch den zur Atmosphäre geführten Teil des Fluidstroms etwa auf dem Temperaturniveau der letzten Kühlstufe (15) erfolgt, während zur Entladung der Aktivkohle ein erwärmter Fluidstrom durch den Aktivkohlefilter geführt ist, der anschließend durch eine Rückführleitung (27) an die Kühlerstufe (12,15) angeschlossen ist.

7. Einrichtung nach einem der vorhergehenden Ansprüche, dadurch **gekennzeichnet**, daß das Mittel zum Freisetzen der Treib- und/oder Kältemittel eine Zerkleinerungsvorrichtung (2), insbesondere eine Walzenanordnung, ist.

8. Einrichtung nach einem der vorhergehenden Ansprüche, dadurch **gekennzeichnet**, daß der Eingang (3) für das zu entsorgende Material in die Zerkleinerungskammer (1) und die Ausgänge (5,6) für das entsorgte Material aus der Zerkleinerungskammer (1) durch Luftschleieranlagen (8) gesichert sind.

9. Einrichtung nach einem der vorhergehenden Ansprüche, dadurch **gekennzeichnet**, daß innerhalb der Zerkleinerungskammer (1) eine Trennung des Materials nach Metallen und Schaum- und/oder Kunststoffen erfolgt.

EP 0 336 254 A1

**Europäisches Patentamt**

## EUROPÄISCHER RECHERCHENBERICHT

Nummer der Anmeldung

EP 89 10 5389

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 531 950  (BURT)<br>* Spalte 1, Zeilen 6-16,39-44; Spalte 2, Zeilen 32-58; Spalte 3, Zeile 24 - Spalte 6, Zeile 48; Figur * | 1,7 | B 09 B    3/00 |
| A | --- | 2,3,5,6 | |
| A | US-A-4 531 951  (BURT et al.)<br>* Spalte 1, Zeilen 6-17; Spalte 2, Zeile 34 - Spalte 3, Zeile 22; Spalte 3, Zeile 55 - Spalte 7, Zeile 35; Figuren * | 1,3,5,6 | |
| A | --- <br> US-A-2 838 801  (DE LONG et al.)<br>* Spalte 1, Zeile 69 - Spalte 3, Zeile 7; Spalte 3, Zeilen 42-54; Figur * | 1 | |
| A | ---<br>DE-U-8 705 805  (BASI SCHÖBERL GmbH & CO.)<br>* Seite 9, Zeile 1 - Seite 10, Zeile 2; Seite 13, Zeilen 11-18; Seite 14, Zeile 7 - Seite 17, Zeile 12; Seite 18, Zeile 36 - Seite 19, Zeile 29; Figur *<br>----- | 1,7 | |

**RECHERCHIERTE SACHGEBIETE (Int. Cl.4)**

B 09 B
B 02 C
B 29 B
C 08 J

Der vorliegende Recherchenbericht wurde für alle Patentansprüche erstellt

| Recherchenort | Abschlußdatum der Recherche | Prüfer |
|---|---|---|
| DEN HAAG | 02-06-1989 | VAN DER ZEE W.T. |